(19) Europäisches Patentamt
European Patent Office
Office européen des brevets

(11) **EP 2 703 863 A1**

(12) **EUROPEAN PATENT APPLICATION**
published in accordance with Art. 153(4) EPC

(43) Date of publication:
05.03.2014 Bulletin 2014/10

(51) Int Cl.:
*G02B 7/02* (2006.01)     *G02B 7/08* (2006.01)
*H04N 5/225* (2006.01)

(21) Application number: 12776640.0

(22) Date of filing: 02.04.2012

(86) International application number:
**PCT/JP2012/002289**

(87) International publication number:
**WO 2012/147278 (01.11.2012 Gazette 2012/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 27.04.2011 JP 2011099569

(71) Applicant: **NEC CASIO Mobile Communications, Ltd.**
**Kawasaki-shi**
**Kanagawa 211-8666 (JP)**

(72) Inventor: **MOTOMURA, Masatoshi**
**Kawasaki-shi**
**Kanagawa 211-8666 (JP)**

(74) Representative: **Vossius & Partner**
**Siebertstrasse 4**
**81675 München (DE)**

(54) **OPTICAL DEVICE, METHOD FOR MOVING LENS OF OPTICAL DEVICE, AND PROGRAM FOR MOVING LENS OF OPTICAL DEVICE**

(57)     Provided is a technique capable of correcting not only a variation due to a moving speed and a temperature change of a lens but also a variation due to a focal distance and a temperature change of the lens, with a high degree of accuracy.

An optical device (100) includes a control unit (1), a lens (2), an image sensor (3), a temperature sensor (4), a storage unit (5) that stores a driving pulse number, lens information, and speed information of the lens (2), an image signal processing unit (6) that acquires the lens information and the speed information from the storage unit (5) under the control of the control unit (1), a piezoelectric element (7) that moves the lens (2), and a driver (8) that controls the piezoelectric element (7). The image signal processing unit (6) moves the lens (2) by the piezoelectric element (7), using the lens information and temperatures of the lens (2) and the piezoelectric element (7), and controls the piezoelectric element (7), using the speed information and the temperature of the piezoelectric element (7).

FIG.1

**Description**

TECHNICAL FIELD

The invention relates to a technique of an optical device, a method of moving a lens of the optical device, and a program for moving the lens of the optical device.

BACKGROUND ART

Hitherto, piezoelectric elements have sometimes been used in a lens unit of a camera mounted on a mobile phone. Since a lens moving property of the piezoelectric element fluctuates significantly with temperature, an individual variation or a temperature variation of the piezoelectric element occurs in a pan-focusing function and a function of moving a lens to a specific position, for example, a scanning start position and a scanning end position in an auto-focusing, which results in a performance degradation. However, a temperature property has a plurality of elements such as a variation in the focal distance of the lens and a variation in the moving speed of the lens, and piezoelectric elements are individually different from each other, and thus it is not possible to perform a highly accurate correction.
In order to solve such a problem that the position or the like of the lens is different for each piezoelectric element, an invention is disclosed in which the position of a lens is specified using an auto-focusing function, a correction coefficient corresponding to a deviation of the moving speed of the lens is calculated for each piezoelectric element from a driving pulse number at the time of the movement of the lens, and correction is performed at the time of the movement of the lens on the basis of the correction coefficient (for example, see Patent Document 1).

RELATED DOCUMENT

PATENT DOCUMENT

[Patent Document 1] Japanese Unexamined Patent Publication No.2007-140417

DISCLOSURE OF THE INVENTION

However, in the related art disclosed in Patent Document 1, only correction is performed that a driving pulse number is reduced when a temperature is high during the temperature correction, whereas the driving pulse number is increased when the temperature is low during the temperature correction, and thus the correction is sometimes performed in a direction in which a deviation rather increases according to individual piezoelectric elements. In this case, an image may not be satisfactorily formed due to the deviation of the focal distance of a lens. However, Patent Document 1 does not disclose a variation in the focal distance of a lens due to a temperature change and a response to the correction thereof.
An object of the invention is to provide a technique capable of correcting not only a variation due to the moving speed and the temperature change of a lens but also a variation due to the focal distance and the temperature change of the lens, with a high degree of accuracy.
Each embodiment of the invention employs the following configuration in order to solve the above-described problems.
A first embodiment relates to an optical device. The optical device according to the first embodiment includes a control unit, a lens, a piezoelectric element that moves the lens, a temperature sensor that measures temperatures of the lens and the piezoelectric element, and a storage unit that stores at least lens information indicating a driving pulse number of the lens and temperature dependence of a focal distance of the lens, as information for recording a lens adjustment value. The control unit moves the lens by the piezoelectric element, using the lens information acquired from the storage unit and the temperatures of the lens and the piezoelectric element which are measured by the temperature sensor.
A second embodiment relates to a method of moving a lens of an optical device. The method of moving a lens of an optical device, according to the second embodiment, including at least a control unit, a lens, a piezoelectric element that moves the lens, a temperature sensor that measures temperatures of the lens and the piezoelectric element, and a storage unit that stores at least lens information indicating a driving pulse number of the lens and temperature dependence of a focal distance of the lens, as information for recording a lens adjustment value, the method including: a lens moving step of causing a computer to drive the piezoelectric element by the control unit so as to move the lens to a predetermined position; a temperature measuring step of causing the control unit to measure temperatures of the lens and the piezoelectric element by the temperature sensor; a lens information acquiring step of acquiring the lens information from the storage unit; and a lens moving step of moving the lens by the piezoelectric element, using the lens information acquired from the storage unit and the temperatures of the lens and the piezoelectric element which are measured by the temperature sensor.

Meanwhile, a third embodiment relates to a program for moving a lens of an optical device. The program for moving a lens of an optical device, according to the third embodiment, including at least a control unit, a lens, a piezoelectric element that moves the lens, a temperature sensor that measures temperatures of the lens and the piezoelectric element, and a storage unit that stores at least lens information indicating a driving pulse number of the lens and temperature dependence of a focal distance of the lens, as information for recording a lens adjustment value. The program causing a computer to drive the piezoelectric element by the control unit so as to function as a lens moving unit for moving the lens to a predetermined position, the program causing the control unit to function as: a temperature measuring unit that measures temperatures of the lens and the piezoelectric element by the temperature sensor; a lens information acquisition unit that acquires the lens information from the storage unit; and a lens moving unit that moves the lens by the piezoelectric element, using the lens information acquired from the storage unit and the temperatures of the lens and the piezoelectric element which are measured by the temperature sensor.

According to the above embodiments, it is possible to provide an optical device, a method of moving a lens of the optical device, and a program for moving the lens of the optical device which can correct not only a variation due to the moving speed and the temperature change of the lens but also a variation due to the focal distance and the temperature change of the lens, with a high degree of accuracy.

BRIEF DESCRIPTION OF THE DRAWINGS

The above-described objects, other objects, features and advantages will be further apparent from the preferred embodiments described below, and the accompanying drawings as follows.

FIG. 1 is a conceptual diagram showing an example of a system configuration of an optical device in the embodiment.
FIG. 2 is a conceptual diagram showing an example of a system configuration of the optical device in the embodiment.
FIG. 3 is an operational diagram showing the movement of a lens during the driving of a piezoelectric element in the embodiment; FIG. 3 (a) to FIG. 3 (d) are diagrams showing operations until the lens is moved by increasing and decreasing a voltage of the piezoelectric element from a static state of the lens, and FIG. 3 (e) is a graph showing a driving pulse (waveform) during the driving of the piezoelectric element.
FIG. 4 is a flow chart showing a procedure of a method of moving a lens in a pulse driving operation of FIG. 2.
FIG. 5 is a flow chart showing a procedure in a case of moving a lens to a specific position.
FIG. 6 is a conceptual diagram showing an image of variations in the moving speed and the temperature property (temperature dependence) of a lens through a piezoelectric element.
FIG. 7 is a conceptual diagram showing an image of variations in the focal distance and the temperature property (temperature dependence) of a lens.
FIG. 8 is a diagram showing a correlation between the focal distance and the moving speed of a lens.
FIG. 9 is a diagram showing a method of correcting the focal distance of a lens due to a temperature change.
FIG. 10 is a graph showing a driving pulse number of a piezoelectric element that moves a lens and is a conceptual diagram in which D denotes a driving pulse number in a theoretical formula, $\Delta$ denotes a driving pulse number in a case where correction is not performed, and $\bigcirc$ denotes an actual measurement value of a driving pulse number.

DESCRIPTION OF EMBODIMENTS

Hereinafter, embodiments of the invention will be described. Meanwhile, the embodiments described below are merely illustrative of the invention, and the invention is not limited to the configurations of the following embodiments.

[First Embodiment]

(System Configuration)

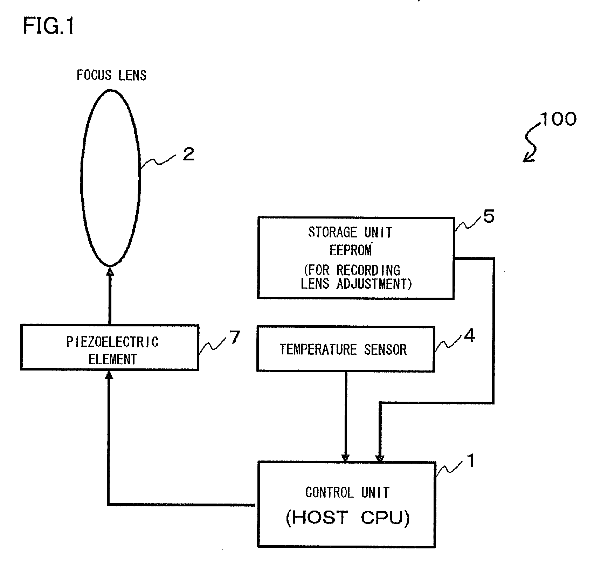

As shown in FIG. 1, an optical device 100 of the embodiment is constituted by a control unit 1 that controls the whole device, one or a plurality of lenses (focus lens) 2, a piezoelectric element 7 for moving the lens 2, a temperature sensor 4 that measures temperatures of the lens 2 and the piezoelectric element 7, a storage unit 5 that stores lens information and speed information, and an image signal processing unit 6 that acquires the temperatures from the temperature sensor 4 and has access to the storage unit 5 to read out the lens information. In addition, the optical device 100 of the embodiment further includes an image sensor 3 that detects an image signal of an image formed by the lens 2, and a driver 8 that controls the piezoelectric element 7.

According to the optical device 100, it is possible to correct not only a variation due to the moving speed and the temperature change of the lens 2 but also a variation due to the focal distance and the temperature change of the lens 2, with a high degree of accuracy.

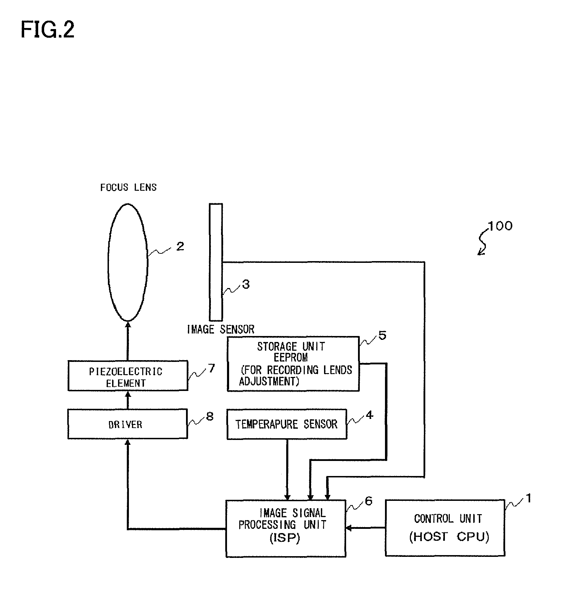

Hereinafter, the optical device 100 according to the embodiment will be described with reference to FIG. 2.

The control unit 1 of the embodiment is constituted by a CPU of a computer embedded in the optical device 100. Next, an optical system of the optical device 100 will be described. Although only one lens 2 is described in FIG. 2, the optical device may be constituted by a plurality of the lenses 2. The one lens 2 or the plurality of lenses 2 are moved in an optical axis direction, and thus focusing is performed. In addition, the optical device may include the lens 2 moving in a direction perpendicular to an optical axis, in order to correct a camera shake. The image sensor 3 is constituted by an imaging element (for example, CCD or CMOS). Light from a subject not shown in the drawing is condensed by the lens 2, and thus an image is formed on an image surface of the image sensor (imaging element) 3.

The temperature sensor 4 is provided in the vicinity of the piezoelectric element 7. The temperature sensor 4 measures the temperature of the piezoelectric element 7 and transmits the temperature to the image signal processing unit 6. As will be described below, the temperature is used to correct the position of the lens. The storage unit 5 stores at least lens information indicating a driving pulse number of the lens 2 and the temperature dependence of the focal distance of the lens 2, and speed information indicating the temperature dependence of the piezoelectric element 7, as information for recording a lens adjustment value. The driving pulse number of the lens 2 refers to a driving pulse number of the lens 2 for focusing during the photographing at a reference temperature to be described below. In addition, an EEPROM of 1 M (1 mega) is used as the storage unit 5. In this manner, in the embodiment, an EEPROM is used as the storage unit 5, but the storage unit may be a database on hardware or may be a database stored in a USB, a micro SB, a CD, a DVD, a B-ray, or the like. In addition, in order to increase an access speed, when the optical device 100 is started, each piece of information may be read out from a database or the like so as to be expanded on a memory of a computer and may be accessed to the information on the memory. Then, the information may be written in an information device such as the original database after the photographing ends, or may be written on a regular basis so as to be prepared for unpredictable downloading of a computer system within the optical device 100.

The image signal processing unit 6 is constituted by an image signal processor (ISP), receives an image signal from the image sensor 3 and the measured temperature from the temperature sensor 4 under the control of the control unit 1, has access to the storage unit 5, and reads out the lens information and the speed information. Here, the lens information and the speed information have temperature dependence. A reference temperature that does not cause a variation due to temperature is preferably 25°C. When the reference temperature is not held, it is not preferable because a variation in the moving speed of the piezoelectric element 7 or a variation in the focal distance of the lens 2 occurs. In addition, the image signal processing unit 6 controls an increase and a decrease in a voltage of the piezoelectric element 7 through the driver 8, and moves the lens 2, thereby allowing the position thereof to be adjusted.

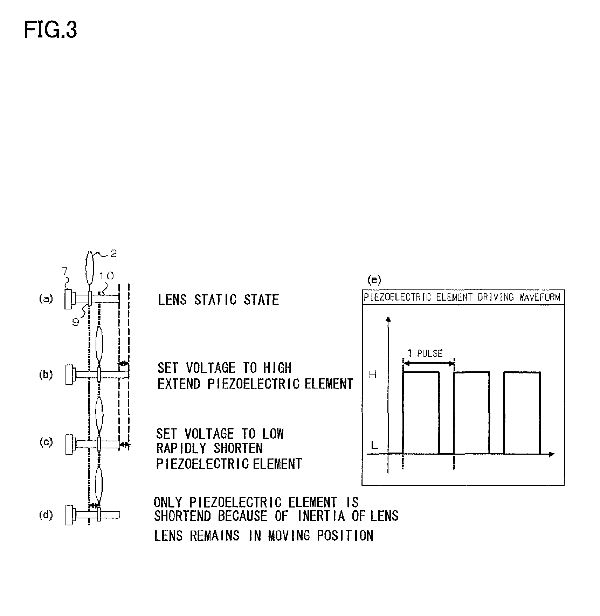

Meanwhile, in order to adjust the position of the lens 2 through the piezoelectric element 7, a lens driving axis 10 is slidably inserted into a ring 9 connected to a lower end of the lens 2, and each lens 2 is connected with each piezoelectric element 7 through the ring 9 and the lens driving axis 10 of the piezoelectric element 7, as shown in FIG. 3 (a) to FIG. 3 (d). In addition, the ring 9 of the lens 2 and the lens driving axis 10 that is slidably inserted into the ring 9 are not fixed to each other. When a high voltage is applied to the piezoelectric element 7, the ring and the lens driving axis move together, but when a low voltage is applied to the piezoelectric element, only the lens driving axis 10 slides into the ring 9. Thus, the ring 9 and the lens 2 remain in a movement destination without being restored.

(Example of Operation)

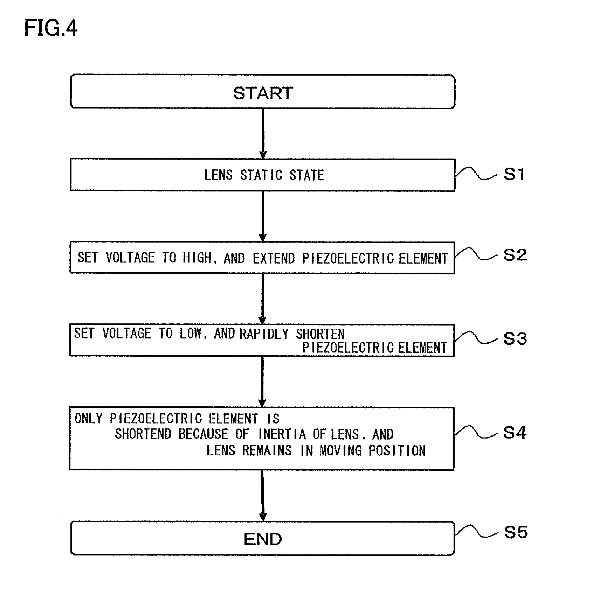

Next, a method of moving a lens in the optical device 100 of the embodiment will be described with reference to FIG. 2 showing a configuration of the optical device 100, FIG. 3 (image diagram) showing operations of the lens during the pulse driving, and a flow chart of FIG. 4.

First, reference will be made to FIG. 3 to describe operations of the lens 2 at an ordinary temperature (reference temperature) based on the flow chart of FIG. 4. As shown in FIG. 3 (a), when the piezoelectric element 7 is not operated, the lens 2 is in a static state (step S1). Then, as shown in FIG. 3 (b), a voltage applied to the piezoelectric element 7 is set to HIGH (high voltage), and thus the lens driving axis 10 of the piezoelectric element 7 is slowly extended, and the lens 2 that is connected to the lens driving axis 10 through the ring 9 is moved together with the lens driving axis 10 (step S2). Next, as shown in FIG. 3 (c), a voltage applied to the piezoelectric element 7 is set to LOW (low voltage), and thus the lens driving axis 10 of the piezoelectric element 7 is rapidly shortened (step S3). At this time, the lens 2 remains at a moving position thereof without changing the position due to inertia, and only the lens driving axis 10 is shortened to thereby return to the original position (step S4). It is possible to operate the lens 2 by repeatedly performing the above operations (step S1 to step S4). FIG. 3 (e) shows a graph of a driving waveform of the piezoelectric element 7 which shows a relationship between the level of a voltage when the voltage is applied to the piezoelectric element 7, and a pulse when the operations of step S1 to step S4 are repeated.

Based on the above principle, the operations of the lens 2 are performed in the order shown in the flow chart of FIG. 4 in a pan-focusing function and a function of moving the lens 2 to a specific position, for example, a scanning start position and a scanning end position, in an auto-focusing.

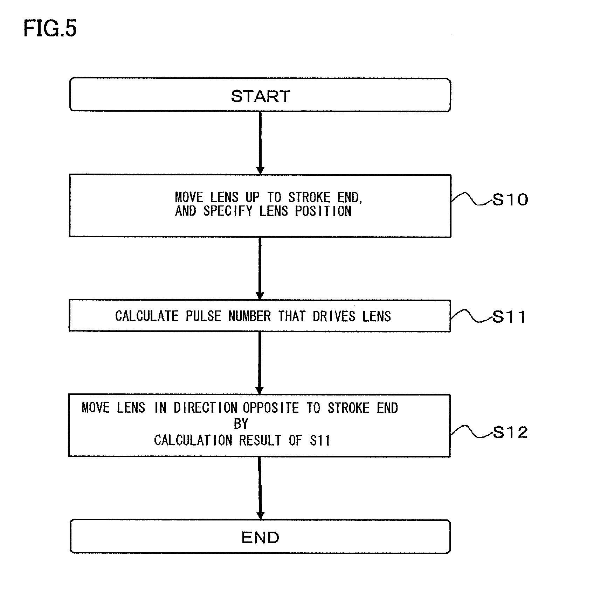

First, as shown in a flow chart of FIG. 5, the lens 2 is moved up to a stroke end so as to specify the position of the lens (step S10). Next, a pulse number of the piezoelectric element 7 that moves the lens 2 is calculated (step S11), and the lens 2 is moved in a direction opposite to the stroke end by the calculation result (step S12).

Here, in step S11 mentioned above, when the pulse number of the piezoelectric element 7 that moves the lens 2 is calculated, it is required to consider the following variations of the piezoelectric element 7.

(i) A variation in the moving speed of the lens 2 due to a temperature change
(ii) A variation in the focal distance of the lens 2 due to a temperature change
(iii) A variation in the speed of each piezoelectric element 7 due to a variation in the friction coefficient of the lens driving axis 10
(iv) A variation due to an installation position of the piezoelectric element

The following problems may occur due to the above variations. First, even though the same driving pulse is applied, the actual amount of the movement of the lens 2 varies for the reason of (i), and the position of the lens 2 to be actually moved varies for the reason of (ii). In addition, the amounts of the variations (i) and (ii) are different from each other for each piezoelectric element 7 for the reasons of (iii) and (iv).

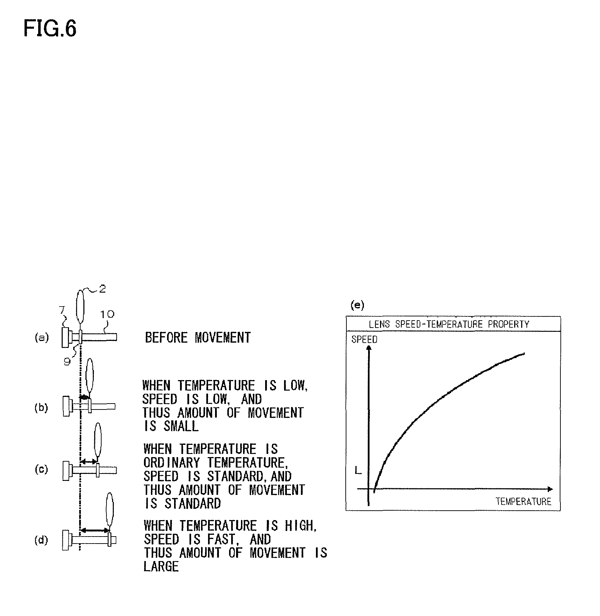

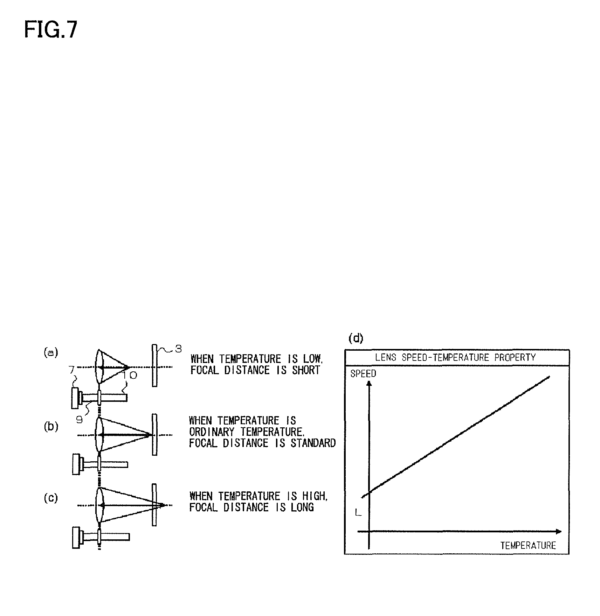

FIG. 6 shows an image diagram of variations in the moving speed and the temperature property (temperature dependence) of a lens through a piezoelectric element, FIG. 7 shows an image diagram of variations in the focal distance and the temperature property (temperature dependence) of a lens. First, speed information indicating the temperature dependence of the piezoelectric element will be described with reference to FIG. 6. When it is assumed that a static state before the movement of the lens is set to a state shown in FIG. 6 (a) and when the temperature of the piezoelectric element 7 is an ordinary temperature (reference temperature), the moving speed of the piezoelectric element 7 (lens driving axis 10) is standard as shown in FIG. 6 (c), and thus the amount of the movement of the lens 2 is standard. On the other hand, when the temperature of the piezoelectric element 7 is low, the moving speed of the piezoelectric element 7 (lens driving axis 10) is slower than the standard as shown in FIG. 6 (b), and thus the amount of the movement of the lens 2 is reduced. In addition, when the temperature of the piezoelectric element 7 is high, the moving speed of the piezoelectric element 7 (lens driving axis 10) is faster than the standard as shown in FIG. 6 (d), and thus the amount of the movement of the lens 2 is increased. A correlation between the speed and the temperature property of the lens 2 at this time is shown in FIG. 6 (e).

Next, lens information indicating the temperature dependence of the focal distance in the lens 2 will be described with reference to FIG. 7. When the temperature of the lens 2 is an ordinary temperature (reference temperature), the focal distance is consistent with the distance up to an image surface of the image sensor 3 as shown in FIG. 7 (b), and thus an image through the lens 2 is satisfactorily formed on the image surface of the image sensor 3. On the other hand, when the temperature of the lens 2 is low, the focal distance of the lens 2 is reduced as shown in FIG. 7 (a), and thus an image through the lens 2 is not formed on the image surface of the image sensor 3. In addition, when the temperature of the lens 2 is high, the focal distance of the lens 2 is increased as shown in FIG. 7 (c), and thus an image through the lens 2 is not formed on the image surface of the image sensor 3. A correlation between the speed and the temperature property of the lens 2 at this time is shown in FIG. 7 (d).

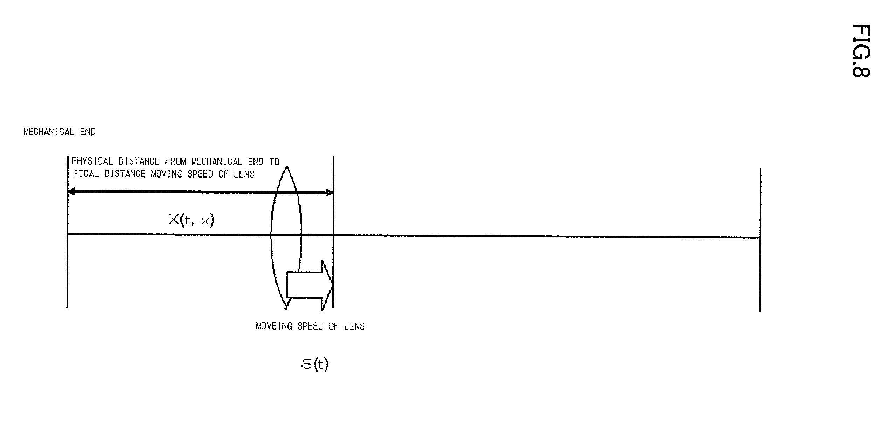

The derivation of a correction formula of the temperature property for resolving the problems of (i) and (ii) is performed in consideration of the above problems. First, as shown in FIG. 8, a pulse number for driving the lens 2 is expressed as the following Expression (1), from a physical distance from a mechanical end to a focal distance and the moving speed of the lens 2.

[Expression 1]

$$\text{Pulse Number} = \frac{\text{Physical Distance from Mechanical End to Focal Distance}}{\text{Speed} \times \text{Conversion Coefficient to Pulse}} \quad \cdots (1)$$

Here, a variable is given as shown in FIG. 8. That is, when the focal distance of the lens 2, that is, the physical distance from the mechanical end to the focal distance, is set to $X(t, x)$ in a case where a subject distance is set to $x$ and the measured temperature of the piezoelectric element 7 is set to $t$, when the moving speed of the lens 2 is set to $S(t)$, and when a conversion coefficient to a pulse is set to COEF, Expression (1) mentioned above is expressed as the following Expression (2). Meanwhile, the conversion coefficient COEF to a pulse is determined from a clock period of a driving pulse of the lens 2, or the like.

[Expression 2]

$$\text{Pulse Number} = \frac{X(t, x)}{S(t) \times COEF} \qquad \cdots (2)$$

Here, as shown in FIG. 7 (d), it is assumed that the deviation of the focal distance of the lens 2 due to its temperature change varies linearly. When a tilt of a straight line is set to A, a reference temperature which equals an adjustment value which is stored in an EEPROM (the storage unit 5 described above) is set to to, and a measured temperature of the piezoelectric element 7 is set to t, and then the focal distance X(t,x) of the lens 2 is expressed as a simple linear function, the focal distance is expressed as the following Expression (3).

[Expression 3]

$$X(t, x) = A(t-t_0) + B \qquad \cdots (3)$$

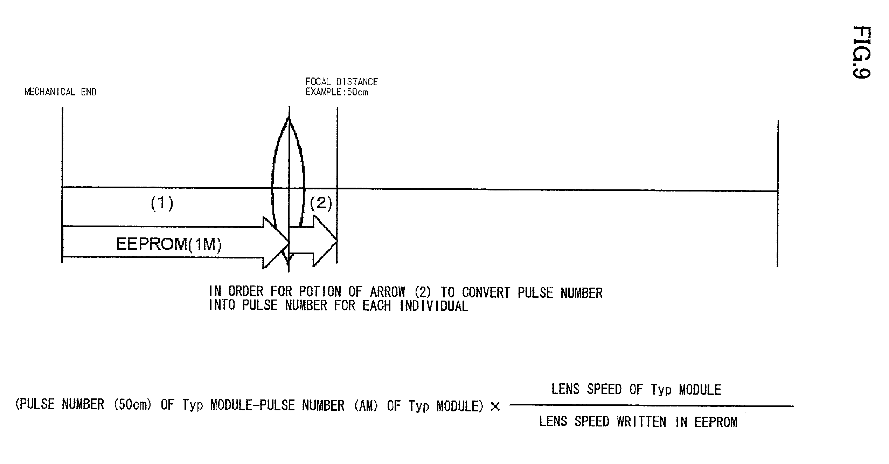

In Expression (3) mentioned above, an intercept B can be calculated from an individual adjustment value of the EEPROM (storage unit 5), and the expression thereof is derived like the following Expression (4) when the piezoelectric element 7 having the center of a variation distribution is set to "$T_{yp}$ module". A lens speed that is written in the EEPROM (storage unit 5) refers to a lens speed that is stored in the EEPROM (storage unit 5). In addition, "$T_{yp}$" is an abbreviated name of "Typical", and means that a variation is present, while a characteristic of the distribution thereof on the center is present. Meanwhile, in order to facilitate the description of introduction, a case where the focal distance of a subject is 50 cm will be considered as shown in FIG. 9. Meanwhile, in the following Expression (4), a pulse number (50 cm) of the $T_{yp}$ module represents a pulse number capable of moving the lens to a position which is focused on a subject having a focal distance of 50 cm in the $T_{yp}$ module, and a pulse number (1 M) of the $T_{yp}$ module represents a pulse number capable of moving the lens to a position which is focused on a subject having a focal distance of 1 M in the $T_{yp}$ module.

[Expression 4]

```
Pulse Number from Mechanical End to Focal Distance(B)
  = Arrow(1) + Arrow(2)
  = EEPROM(1M) + (Pulse Number(50cm) of Typ module -
    Pulse Number(1M) of Typ module)
      Lens Speed of Typ module
    × ─────────────────────────                            ···(4)
      Lens Speed Written in EEPROM
```

In Expression (4) mentioned above, since the conversion to a physical distance can be performed based on pulse number×speed, the following Expression (5) is established with respect to the intercept B. As described above, the COEF is a conversion coefficient to a pulse.

[Expression 5]

$$B = \left(\begin{array}{l}\text{EEPROM(1M)} + (\text{Pulse Number(50cm) of Typ module} - \\ \text{Pulse Number(1M) of Typ Module)} \\ \times \dfrac{\text{Lens Speed of Typ module}}{\text{Lens Speed Written in EEPROM}}\end{array}\right) \times COEF \times S(t) \qquad \cdots (5)$$

Here, when the pulse number (50 cm) of the $T_{yp}$ module is set to x (in the $T_{yp}$ module, the pulse number capable of moving the lens to a position which is focused on a subject having a focal distance of 50 cm), the pulse number (1 M) of the $T_{yp}$ module is set to $T_{yp}$ (in the $T_{yp}$ module, the pulse number capable of moving the lens to a position which is focused on a subject having a focal distance of 1 M), a pulse number capable of moving the lens to a position which is focused on a subject having a focal distance of 1 M in an individual piezoelectric element 7, which is stored in the EEPROM (1 M), that is, the storage unit 5, is set to EEP, a lens speed which is stored in the EEPROM (storage unit 5) is set to EEP_SPEED, and a lens speed of the $T_{yp}$ module is set to $T_{yp}$_SPEED, and then Expression (5) mentioned above is arranged, the intercept B is expressed as the following Expression (6).

[Expression 6]

$$B = \left( EEP + (x - Typ) \times \frac{Typ\_SPEED}{EEP\_SPEED} \right) \times COEF \times S(t) \quad \cdots(6)$$

Here, when Expression (6) mentioned above is substituted into Expression (3) mentioned above, the following Expression (7) is derived as the focal distance X (t, x) of the lens 2.

[Expression 7]

$$X(t, x) = A(t-t_0) + \left( EEP + (x - Typ) \times \frac{Typ\_SPEED}{EEP\_SPEED} \right) \times COEF \times S(t) \quad \cdots(7)$$

Expression (7) mentioned above is an expression for calculating a correction value for correcting the variation in the focal distance of the lens 2 of the above-mentioned (ii).

Next, an expression is considered for calculating a correction value with respects to the variation in the speed of the lens 2 due to a temperature change of the above-mentioned (i). It is considered that the moving speed S(t) of the lens 2 represents a speed-temperature property in an expression using the measured temperature t of the piezoelectric element 7. That is, when the moving speed of the lens 2 is set to S(t) and the reference temperature of the lens is set to to, a temperature correction coefficient (for speed) $T_1$ (t) is expressed as the following Expression (8).

[Expression 8]

$$T_1(t) = \frac{S(t)}{S(t_0)} \quad \cdots(8)$$

Here, a speed $S(t_0)$ in the reference temperature is expressed as the following Expression (9) based on the lens speed EEP_SPEED that is stored in the storage unit 5.

[Expression 9]

$$S(t_0) = EEP\_SPEED \quad \cdots(9)$$

Therefore, the following Expression (10) is calculated with respect to the moving speed S(t) of the lens 2.

[Expression 10]

$$S(t) = S(t_0) \times T_1(t) = EEP\_SPEED \times T_1(t) \quad \cdots(10)$$

A temperature correction coefficient $T_1(t)$ may be included as a table in a soft manner on the basis of an actual measurement value. As is obvious from the above, a desired pulse number of the subject distance x from the mechanical end can be calculated by substituting Expression (6) and Expression (10) into Expression (3) mentioned above. First, when Expression (6) mentioned above is substituted into Expression (3) mentioned above, the following Expression (11) can be derived.

[Expression 11]

$$\text{Pulse Number} = \frac{A(t-t_0) + \left(EEP + (x - Typ) \times \dfrac{Typ\_SPEED}{EEP\_SPEED}\right) \times COEF \times S(t)}{S(t) \times COEF}$$

$$= \frac{A(t-t_0)}{S(t) \times COEF} + EEP + (x - Typ) \times \frac{Typ\_SPEED}{EEP\_SPEED} \qquad \cdots(11)$$

When Expression (10) mentioned above is substituted into Expression (11) mentioned above, the following Expression (12) is derived.

[Expression 12]

$$\text{Pulse Number} = \frac{A(t-t_0)}{EEP\_SPEED \times T_1(t) \times COEF} + EEP + (x - Typ) \times \frac{Typ\_SPEED}{EEP\_SPEED} \qquad \cdots(12)$$

(Operation and Effect of First Embodiment)

It is possible to correct " (i) a variation in the speed of the lens 2 due to a temperature change" and "(ii) a variation in the focal distance of the lens 2 due to a temperature change" by satisfying Expression (12) mentioned above. Thus, it is also possible to necessarily resolve " (iii) a variation in the speed of each piezoelectric element 7 due to a variation in the friction coefficient of a driving axis of the piezoelectric element 7" and "(iv) a variation due to an installation position".

(Verification Experiment)

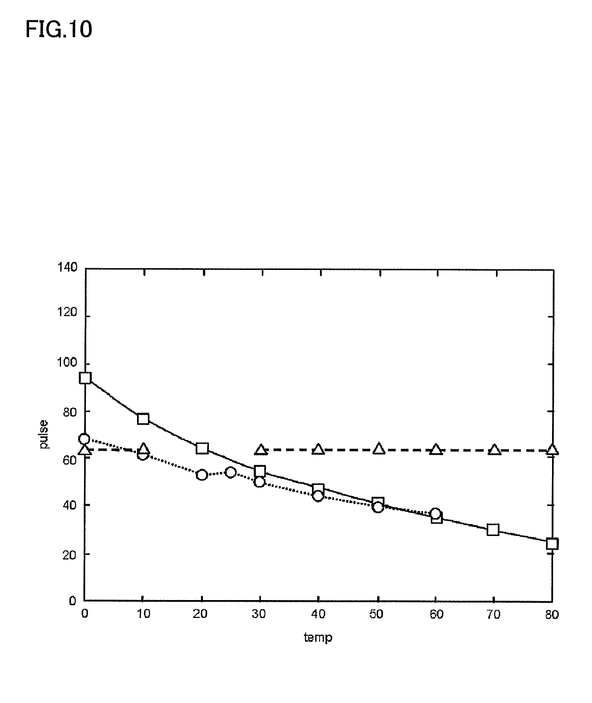

Here, it is verified whether an actual measurement value can be corrected, on the basis of Expression (12) mentioned above. In FIG. 10, "temp" of the horizontal axis indicates a measured temperature (°C) of the lens 2, and "pulse" of the vertical axis indicates a pulse number of the piezoelectric element 7. In addition, □ connected by a solid line denotes a case where the correction is performed on the basis of Expression (12) derived above, △ connected by a dashed line denotes a case where correction is not performed, and ○ connected by a dotted line denotes an actual measurement value. As mentioned above, in the optical device 100 of the embodiment, the correction is performed in consideration of not only " (i) a variation in the speed of the lens 2 due to a temperature change" but also " (ii) a variation in the focal distance of the lens 2 due to a temperature change". For this reason, it is possible to provide an optical device, a method of moving a lens of the optical device, and a program for moving the lens of the optical device which are capable of correcting variations in not only the moving speed for each lens but also its focal distance due to a temperature change, with a high degree of accuracy.

(Other Embodiments)

In the above-mentioned embodiment, a description has been made of a case where a temperature property of the focal distance of the lens 2 is approximated by a linear function and a speed property of the lens 2 is corrected on the basis of a table, but the invention is not limited thereto. For example, the speed property of the lens 2 may be approximated by a different function instead of the table. In addition, for the purpose of simplifying software, the invention may be implemented without correcting the speed property of the lens 2.

In addition, in the above-mentioned embodiment, an ISP (image signal processing unit 6) is used as the image signal processing unit 6, but the invention is not limited thereto. For example, the entire control may be performed using a host CPU (control unit 1) without using the ISP. In addition, as described above, the type (CMOS, CCD, or the like) of the image sensor 3 is no object. Examples of utilizing the optical device and the like of the invention include an imaging device such as a digital camera or a camera mounted on a mobile phone, a semiconductor device used for a hi-vision memory movie, and the like.

Meanwhile, in the above-mentioned embodiments, a plurality of steps has been described in order, but it is possible to change the order of the plurality of steps in the range consistent with the contents thereof. In addition, the invention is not limited to the above-described embodiments, and it is possible to combine the steps in the range consistent with the contents thereof.

The application is based on Japanese Patent Application No. 2011-099569 filed on April 27, 2011, the content of which is incorporated herein by reference.

**Claims**

1. An optical device comprising:

   a control unit;
   a lens;
   a piezoelectric element that moves the lens;
   a temperature sensor that measures temperatures of the lens and the piezoelectric element; and
   a storage unit that stores at least lens information indicating a driving pulse number of the lens and temperature dependence of a focal distance of the lens, as information for recording a lens adjustment value,
   wherein the control unit moves the lens by the piezoelectric element, using the lens information acquired from the storage unit and the temperatures of the lens and the piezoelectric element which are measured by the temperature sensor.

2. The optical device according to claim 1,
   wherein the storage unit further stores speed information indicating temperature dependence of the piezoelectric element, and
   wherein the control unit controls the piezoelectric element, using the speed information acquired from the storage unit and the temperature of the piezoelectric element which is measured by the temperature sensor.

3. The optical device according to claim 2, wherein the storage unit further stores a lens speed, and a pulse number of the piezoelectric element for correcting the focal distance of the lens satisfies conditions of the following expression, when a tilt on the assumption that a deviation of the focal distance of the lens due to a temperature change varies linearly is set to A, a reference temperature that equals the lens adjustment value which is stored in the storage unit is set to to, a measured temperature of the piezoelectric element is set to t, the lens speed stored in the storage unit is set to EEP_SPEED, a temperature correction coefficient is set to $T_1(t)$, a conversion coefficient to a pulse is set to COEF, a pulse number capable of moving the lens to a position which is focused on a subject of 1 M in an individual of the piezoelectric element is set to EEP, a pulse number capable of moving the lens to a position which is focused on a subject of 50 cm in a $T_{yp}$ module when the piezoelectric element having the center of a variation distribution is set to the $T_{yp}$ module is set to x, a pulse number capable of moving the lens to a position which is focused on a subject of 1 M in the $T_{yp}$ module is set to $T_{yp}$, the lens speed which is stored in the storage unit is set to EEP_SPEED, and a lens speed of the $T_{yp}$ module is set to $T_{yp\_}$SPEED.

   [Expression 13]

$$\text{Pulse Number} = \frac{A(t-t_0)}{EEP\_SPEED \times T_1(t) \times COEF} + EEP + (x - Typ) \times \frac{Typ\_SPEED}{EEP\_SPEED}$$

4. A method of moving a lens of an optical device including at least a control unit, a lens, a piezoelectric element that moves the lens, a temperature sensor that measures temperatures of the lens and the piezoelectric element, and a storage unit that stores at least lens information indicating a driving pulse number of the lens and temperature dependence of a focal distance of the lens, as information for recording a lens adjustment value, the method comprising:

   the lens moving step of causing a computer to drive the piezoelectric element by the control unit so as to move the lens to a predetermined position;
   a temperature measuring step of causing the control unit to measure temperatures of the lens and the piezoelectric element by the temperature sensor;
   the lens information acquiring step of acquiring the lens information from the storage unit; and
   the lens moving step of moving the lens by the piezoelectric element, using the lens information acquired from the storage unit and the temperatures of the lens and the piezoelectric element which are measured by the temperature sensor.

5. The method according to claim 4, wherein the storage unit further stores speed information indicating temperature dependence of the piezoelectric element, and

wherein the method further comprises:

the speed information acquiring step of causing the control unit to acquire the speed information from the storage unit; and

a step of causing the control unit to control the piezoelectric element, using the speed information acquired from the storage unit and the temperatures of the lens and the piezoelectric element which are acquired in the temperature measuring step.

6. The method according to claim 5, wherein the storage unit further stores a lens speed, and a pulse number of the piezoelectric element for correcting the focal distance of the lens satisfies conditions of the following expression, when a tilt on the assumption that a deviation of the focal distance of the lens due to a temperature change varies linearly is set to A, a reference temperature that equals the lens adjustment value which is stored in the storage unit is set to to, a measured temperature of the piezoelectric element is set to t, the lens speed which is stored in the storage unit is set to EEP_SPEED, a temperature correction coefficient is set to $T_1(t)$, a conversion coefficient to a pulse is set to COEF, a pulse number capable of moving the lens to a position which is focused on a subject of 1 M in an individual of the piezoelectric element is set to EEP, a pulse number capable of moving the lens to a position which is focused on a subject of 50 cm in a $T_{yp}$ module when the piezoelectric element having the center of a variation distribution is set to the $T_{yp}$ module is set to x, a pulse number capable of moving the lens to a position which is focused on a subject of 1 M in the $T_{yp}$ module is set to $T_{yp}$, the lens speed which is stored in the storage unit is set to EEP_SPEED, and a lens speed of the $T_{yp}$ module is set to $T_{yp\_}$SPEED.

[Expression 14]

$$\text{Pulse Number} = \frac{A(t-t_0)}{EEP\_SPEED \times T_1(t) \times COEF} + EEP + (x - Typ) \times \frac{Typ\_SPEED}{EEP\_SPEED}$$

7. The method according to claim 5, wherein the step of controlling the piezoelectric element includes
a step of moving the lens to a stroke end and specifying a position of the lens;
a step of calculating a pulse number of the piezoelectric element for moving the lens; and
a step of moving the lens in a direction opposite to the stroke end by the calculation result.

8. A program for moving a lens of an optical device including at least a control unit, a lens, a piezoelectric element that moves the lens, a temperature sensor that measures temperatures of the lens and the piezoelectric element, and a storage unit that stores at least lens information indicating a driving pulse number of the lens and temperature dependence of a focal distance of the lens, as information for recording a lens adjustment value, the program causing a computer to drive the piezoelectric element by the control unit so as to function as a lens moving unit for moving the lens to a predetermined position, the program causing the control unit to function as:

a temperature measuring unit that measures temperatures of the lens and the piezoelectric element by the temperature sensor;
the lens information acquisition unit that acquires the lens information from the storage unit; and
the lens moving unit that moves the lens by the piezoelectric element, using the lens information acquired from the storage unit and the temperatures of the lens and the piezoelectric element which are measured by the temperature sensor.

9. The program according to claim 8, wherein the storage unit further stores speed information indicating temperature dependence of the piezoelectric element, and
wherein the control unit further comprises:

the speed information acquisition unit that acquires the speed information from the storage unit; and
a unit of controlling the piezoelectric element, using the speed information acquired from the storage unit and the temperatures of the lens and the piezoelectric element which are acquired by the temperature measurement unit.

10. The program according to claim 9, the storage unit further stores a lens speed, and a pulse number of the piezoelectric element for correcting the focal distance of the lens satisfies conditions of the following expression, when a tilt on the assumption that a deviation of the focal distance of the lens due to a temperature change varies linearly is set to A, a reference temperature that equals the lens adjustment value which is stored in the storage unit is set to to, a measured temperature of the piezoelectric element is set to t, the lens speed which is stored in the storage unit is set to EEP_SPEED, a temperature correction coefficient is set to $T_1(t)$, a conversion coefficient to a pulse is set to COEF, a pulse number capable of moving the lens to a position which is focused on a subject of 1 M in an individual of the piezoelectric element is set to EEP, a pulse number capable of moving the lens to a position which is focused on a subject of 50 cm in a $T_{yp}$ module when the piezoelectric element having the center of a variation distribution is set to the $T_{yp}$ module is set to x, a pulse number capable of moving the lens to a position which is focused on a subject of 1 M in the $T_{yp}$ module is set to $T_{yp}$, the lens speed which is stored in the storage unit is set to EEP_SPEED, and a lens speed of the $T_{yp}$ module is set to $T_{yp\_}$SPEED.

[Expression 15]

$$\text{Pulse Number} = \frac{A(t-t_0)}{EEP\_SPEED \times T_1(t) \times COEF} + EEP + (x - Typ) \times \frac{Typ\_SPEED}{EEP\_SPEED}$$

FIG.1

FOCUS LENS

2

100

STORAGE UNIT
EEPROM
(FOR RECORDING
LENS ADJUSTMENT) 5

PIEZOELECTRIC
ELEMENT 7

TEMPERATURE SENSOR 4

CONTROL UNIT
(HOST CPU) 1

FIG.2

FOCUS LENS

2

3

IMAGE SENSOR

STORAGE UNIT
EEPROM
(FOR RECORDING LENDS
ADJUSTMENT)  5

PIEZOELECTRIC
ELEMENT  7

DRIVER  8

TEMPERAPURE SENSOR  4

IMAGE SIGNAL
PROCESSING UNIT
(ISP)  6

CONTROL UNIT
(HOST CPU)  1

100

# FIG.3

(a) LENS STATIC STATE

(b) SET VOLTAGE TO HIGH
EXTEND PIEZOELECTRIC ELEMENT

(c) SET VOLTAGE TO LOW
RAPIDLY SHORTEN
PIEZOELECTRIC ELEMENT

(d) ONLY PIEZOELECTRIC ELEMENT IS
SHORTEND BECAUSE OF INERTIA OF LENS
LENS REMAINS IN MOVING POSITION

(e)

PIEZOELECTRIC ELEMENT DRIVING WAVEFORM

1 PULSE

H

L

FIG.4

```
                        ┌──────────────────────────────────────┐
                        │               START                  │
                        └──────────────────────────────────────┘
                                         │
                                         ▼
                        ┌──────────────────────────────────────┐
                        │          LENS STATIC STATE           │~ S1
                        └──────────────────────────────────────┘
                                         │
                                         ▼
                        ┌──────────────────────────────────────┐
                        │ SET VOLTAGE TO HIGH, AND EXTEND      │~ S2
                        │ PIEZOELECTRIC ELEMENT                │
                        └──────────────────────────────────────┘
                                         │
                                         ▼
                        ┌──────────────────────────────────────┐
                        │ SET VOLTAGE TO LOW, AND RAPIDLY       │~ S3
                        │ SHORTEN PIEZOELECTRIC ELEMENT        │
                        └──────────────────────────────────────┘
                                         │
                                         ▼
                        ┌──────────────────────────────────────┐
                        │ ONLY PIEZOELECTRIC ELEMENT IS         │~ S4
                        │ SHORTEND BECAUSE OF INERTIA OF LENS,  │
                        │ AND LENS REMAINS IN MOVING POSITION   │
                        └──────────────────────────────────────┘
                                         │
                                         ▼
                        ┌──────────────────────────────────────┐
                        │               END                    │~ S5
                        └──────────────────────────────────────┘
```

FIG.5

```
                  ┌─────────────────────────────────┐
                  │             START               │
                  └─────────────────────────────────┘
                                   │
                                   ▼
                  ┌─────────────────────────────────┐
                  │  MOVE LENS UP TO STROKE END,     │ ～S10
                  │  AND SPECIFY LENS POSITION       │
                  └─────────────────────────────────┘
                                   │
                                   ▼
                  ┌─────────────────────────────────┐
                  │  CALCULATE PULSE NUMBER THAT     │ ～S11
                  │  DRIVES LENS                     │
                  └─────────────────────────────────┘
                                   │
                                   ▼
                  ┌─────────────────────────────────┐
                  │  MOVE LENS IN DIRECTION OPPOSITE │
                  │  TO STROKE END                   │ ～S12
                  │  BY                              │
                  │  CALCULATION RESULT OF S11       │
                  └─────────────────────────────────┘
                                   │
                                   ▼
                  ┌─────────────────────────────────┐
                  │              END                │
                  └─────────────────────────────────┘
```

# FIG.6

(a)

BEFORE MOVEMENT

(b)

WHEN TEMPERATURE IS LOW,
SPEED IS LOW, AND
THUS AMOUNT OF MOVEMENT
IS SMALL

(c)

WHEN TEMPERATURE IS
ORDINARY TEMPERATURE,
SPEED IS STANDARD, AND
THUS AMOUNT OF MOVEMENT
IS STANDARD

(d)

WHEN TEMPERATURE IS HIGH,
SPEED IS FAST, AND
THUS AMOUNT OF MOVEMENT IS
LARGE

(e)

LENS SPEED-TEMPERATURE PROPERTY

SPEED

L

TEMPERATURE

# FIG.7

(a)

WHEN TEMPERATURE IS LOW,
FOCAL DISTANCE IS SHORT

(b)

WHEN TEMPERATURE IS
ORDINARY TEMPERATURE.
FOCAL DISTANCE IS STANDARD

(c)

WHEN TEMPERATURE IS HIGH,
FOCAL DISTANCE IS LONG

(d)

LENS SPEED-TEMPERATURE PROPERTY

SPEED

TEMPERATURE

# FIG.8

MECHANICAL END

PHYSICAL DISTANCE FROM MECHANICAL END TO
FOCAL DISTANCE MOVING SPEED OF LENS

$X(t, x)$

MOVING SPEED OF LENS

$S(t)$

FIG.9

MECHANICAL END

FOCAL DISTANCE
EXAMPLE:50cm

(1)

(2)

EEPROM(1M)

IN ORDER FOR POTION OF ARROW (2) TO CONVERT PULSE NUMBER
INTO PULSE NUMBER FOR EACH INDIVIDUAL

$$\text{(PULSE NUMBER (50cm) OF Typ MODULE-PULSE NUMBER (AM) OF Typ MODULE)} \times \frac{\text{LENS SPEED OF Typ MODULE}}{\text{LENS SPEED WRITTEN IN EEPROM}}$$

FIG.10

## INTERNATIONAL SEARCH REPORT

| | International application No. |
|---|---|
| | PCT/JP2012/002289 |

A. CLASSIFICATION OF SUBJECT MATTER
*G02B7/02*(2006.01)i, *G02B7/08*(2006.01)i, *H04N5/225*(2006.01)i

According to International Patent Classification (IPC) or to both national classification and IPC

B. FIELDS SEARCHED

Minimum documentation searched (classification system followed by classification symbols)
G02B7/02, G02B7/08, H04N5/225

Documentation searched other than minimum documentation to the extent that such documents are included in the fields searched
Jitsuyo Shinan Koho          1922–1996   Jitsuyo Shinan Toroku Koho   1996–2012
Kokai Jitsuyo Shinan Koho   1971–2012   Toroku Jitsuyo Shinan Koho   1994–2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2007-140417 A  (Casio Hitachi Mobile Communications Co., Ltd.), 07 June 2007 (07.06.2007), paragraphs [0011], [0036] to [0039], [0050] to [0072], [0084] to [0093]; fig. 3, 5 to 18 (Family: none) | 1-10 |
| Y | JP 2003-185908 A  (Matsushita Electric Industrial Co., Ltd.), 03 July 2003 (03.07.2003), paragraphs [0001], [0013], [0014], [0033] to [0059]; fig. 1 to 4 (Family: none) | 1-10 |

☒  Further documents are listed in the continuation of Box C.         ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 June, 2012 (19.06.12) | 03 July, 2012 (03.07.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/002289

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2002-95272 A  (Minolta Co., Ltd.),<br>29 March 2002 (29.03.2002),<br>paragraphs [0001], [0014] to [0032]; fig. 3, 8<br>to 14<br>& US 2002/0033322 A1 | 1-10 |

Form PCT/ISA/210 (continuation of second sheet) (July 2009)

**EP 2 703 863 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007140417 A
- JP 2011099569 A